# EUROPEAN PATENT APPLICATION

(11) **EP 1 739 961 A2**
(43) Date of publication of application: **03.01.2007**
(21) Application number: 06013476.4
(22) Date of filing: 29.06.2006
(51) Int. Cl.: H04N 5/44, H04N 5/50

(54) **Broadcast receiving apparatus and broadcast receiving method**

(30) Priority: 30.06.2005 JP 2005192980
(71) Applicant: KABUSHIKI KAISHA TOSHIBA, Tokyo 105-8001 (JP)
(72) Inventor: Kudo, Shiro, Minato-ku Tokyo 105-8001 (JP)
(74) Representative: HOFFMANN EITLE

(57) **Abstract**

According to one embodiment of the invention, a broadcast receiving apparatus includes first and second tuner sections (11, 12) which select a broadcast signal as a channel, demodulate the selected channel, and output a demodulation signal, a decoder section (15, 16) which decodes the modulation signal and outputs video image and voice signals, a browser section (17, 18) which samples data broadcast information from the modulation signal produced from the tuner section and generates a data broadcast screen, a control section (10) which controls the tuner section, the decoder section, and the browser section in order to carry out receiving of another station by means of the second tuner section while continuing data broadcast receiving and data broadcast information storing of the first tuner section when an instruction for protection of the data broadcast occurs, and the first tuner section receives a receiving instruction of such another station while receiving the data broadcast.

## Description

One embodiment of the present invention relates to a broadcast receiving apparatus for receiving a data broadcast, and in particular, to a broadcast receiving apparatus and a broadcast receiving method for protecting information on a data broadcast being received.

In recent years, with penetration of digital technology, a variety of receiving modes have been prevalent in digital broadcasting as well. An example of these modes includes a digital data broadcast, making it possible to view a program in a diversified manner.

In patent document 1 (Jpn. Pat. Appln. KOKAI Publication No. 8-140064), there is disclosed a technique of, with respect to such a character broadcast, causing a tuner for a children screen to receive a character broadcast while a general broadcast is received by a tuner for a parent screen, thereby always continuously receiving the character broadcast.

However, in patent document 1, one of a plurality of tuners is allocated to the character broadcast. Thus, even in the case where the character broadcast is not always protected, such one tuner becomes active. Therefore, there is a problem that resources are not fully utilized.

It is an object of the present invention to provide a broadcast receiving apparatus and a broadcast receiving method capable of, while selectively protecting a data broadcast that needs protection, temporarily viewing another channel as well.

According to one embodiment of the present invention, there is provided A broadcast receiving apparatus, comprising: first and second tuner sections which select a broadcast signal as a channel, demodulate the selected channel, and output a demodulation signal; a decoder section which decodes the demodulation signal and outputs video image and voice signals; a browser section which samples data broadcast information from the demodulation signal produced from the tuner section and generates a data broadcast screen; a control section which controls the tuner section, the decoder section, and the browser section in order to carry out receiving of another station by means of the second tuner section while continuing data broadcast receiving and data broadcast information storing by the first tuner section when an instruction for protection of the data broadcast occurs, and the first tuner section receives a receiving instruction of the another station while receiving the data broadcast.

In this manner, there can be provided a broadcast receiving apparatus and a broadcast receiving method capable of, while selectively protecting a data broadcast that needs protection, temporarily viewing another channel as well.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting an example of a configuration of a broadcast receiving apparatus according to an embodiment of the present invention;
FIG. 2 is a block diagram depicting another example of a configuration of a broadcast receiving apparatus according to an embodiment of the present invention;
FIG. 3 is a block diagram depicting another example of a configuration of a broadcast receiving apparatus according to an embodiment of the present invention;
FIG. 4 is a block diagram depicting another example of a configuration of a broadcast receiving apparatus according to an embodiment of the present invention;
FIG. 5 is a flow chart showing an example of channel change in a broadcast receiving apparatus according to an embodiment of the present invention;
FIG. 6 is a flow chart showing another example of channel change in a broadcast receiving apparatus according to an embodiment of the present invention;
FIG. 7 is an illustrative view showing an example (remote controller) of an operation for registering protection in a broadcast receiving apparatus according to an embodiment of the present invention;
FIG. 8 is an illustrative view showing an example (menu) of an operation for registering protection in a broadcast receiving apparatus according to an embodiment of the present invention;
FIG. 9 is an illustrative view showing an example (program table) of an operation for registering protection in a broadcast receiving apparatus according to an embodiment of the present invention;
FIG. 10 is an illustrative view showing an example (menu of program table) of an operation for registering protection in a broadcast receiving apparatus according to an embodiment of the present invention;
FIG. 11 is an illustrative view showing an example (remote controller) of an operation for canceling protection in a broadcast receiving apparatus according to an embodiment of the present invention;
FIG. 12 is an illustrative view showing an example (menu) of an operation for canceling protection in a broadcast receiving apparatus according to an embodiment of the present invention;
FIG. 13 is an illustrative view showing an example (program table) of an operation for canceling protection in a broadcast receiving apparatus according to an embodiment of the present invention;
FIG. 14 is an illustrative view showing an example (menu of program table) of an operation for canceling protection in a broadcast receiving apparatus according to an embodiment of the present invention;
FIG. 15 is an illustrative view showing an example (cursor) of an operation for canceling protection in a broadcast receiving apparatus according to an embodiment of the present invention;
FIG. 16 is an illustrative view showing an example of a protection message in a broadcast receiving apparatus according to an embodiment of the present invention;
FIG. 17 is an illustrative view showing an example of a protecting message in a broadcast receiving apparatus according to an embodiment of the present invention;
FIG. 18 is an illustrative view showing an example of a protecting message in a broadcast receiving apparatus according to an embodiment of the present invention;
FIG. 19 is an illustrative view showing an example of a double screen display after channel change in a broadcast receiving apparatus according to an embodiment of the present invention;
FIG. 20 is an illustrative view showing another example of a double screen display after channel change in a broadcast receiving apparatus according to an embodiment of the present invention;
FIG. 21 is an illustrative view showing another example of a double screen display after channel change in a broadcast receiving apparatus according to an embodiment of the present invention;
FIG. 22 is an illustrative view showing another example of a double screen display after channel change in a broadcast receiving apparatus according to an embodiment of the present invention; and
FIG. 23 is an illustrative view showing another example of a double screen display after registering protection in a broadcast receiving apparatus according to an embodiment of the present invention.

Various embodiments according to the invention will be described hereinafter with reference to the accompanying drawings.

One embodiment according to the present invention is to provide a broadcast receiving apparatus and a broadcast receiving method capable of, while selectively protecting a data broadcast that needs protection, temporarily viewing another channel as well.

One embodiment according to the present invention is a broadcast receiving apparatus comprising: first and second tuner sections which select a broadcast signal as a channel, demodulate the selected channel, and output a demodulation signal; a decoder section which decodes the demodulation signal and outputs video image and voice signals; a browser section which samples data broadcast information from the modulation signal obtained from the tuner section and generates a data broadcast screen; a control section which controls the tuner section, the decoder section, and the browser section in order to carry out receiving of another station by means of the second tuner section while continuing data broadcast receiving and data broadcast information storing of the first tuner section when an instruction for protection of the data broadcast occurs, and the first tuner section receives a receiving instruction of such another station while receiving the data broadcast.

In this manner, there is provided a broadcast receiving apparatus and a broadcast receiving method capable of, while selectively protecting a data broadcast that needs protection, temporarily viewing another channel as well.

Hereinafter, embodiments of the present invention will be described in detail with reference to the accompanying drawings.

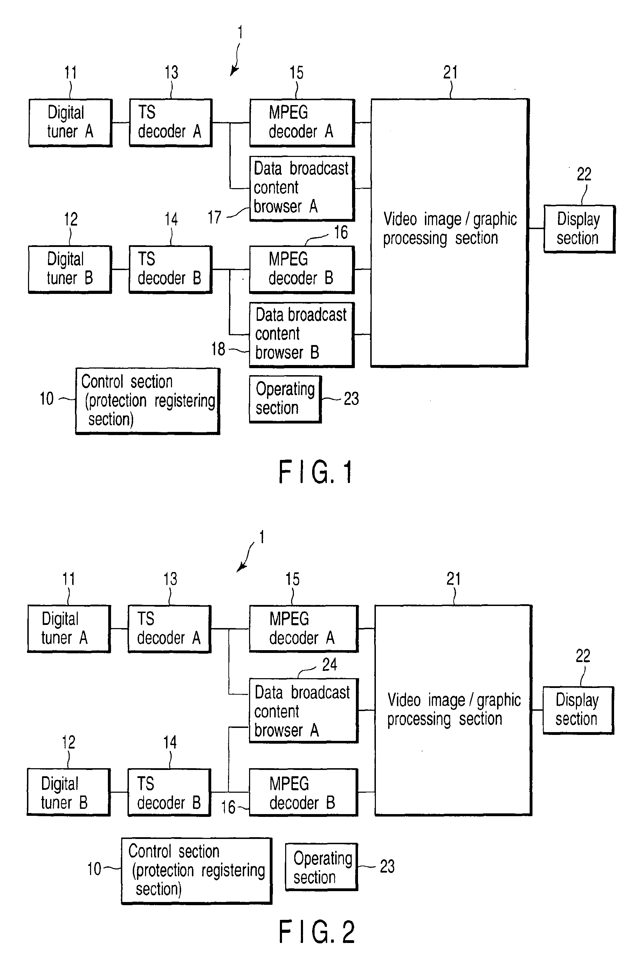

FIGS. 1 to 4 are block diagrams each depicting an example of a configuration of a broadcast receiving apparatus according to an embodiment of the present invention.

### <Broadcast receiving apparatus according to an embodiment of the present invention>

First, an example of a configuration of a broadcast receiving apparatus according to an embodiment of the present invention will be described below with reference to FIGS. 1 to 4.

### (Configuration)

A broadcast receiving apparatus 1 according to an embodiment of the present invention, as shown in FIGS. 1 to 4, has: a control section 10 for controlling a whole operation; an operating section 23 such as a remote controller; a first digital tuner 11; a TS decoder A13 for receiving an output from the tuner; an MPEG decoder A15 for receiving an output from the decoder; and a data broadcast content browser A17 for receiving an output from the TS decoder A13 similarly. Further, the broadcast receiving apparatus 1, as shown in FIGS. 1 to 4, has: a second digital tuner 12; a TS decoder B14 for receiving an output from the tuner; an MPEG decoder B16 for receiving an output from the decoder; and a data broadcast content browser B18 for receiving an output from the TS decoder B14 similarly. Further, this apparatus has a video image/graphic processing section 21 for receiving image signals from the decoders 15 and 16 and the browsers 17 and 18 and outputting a video image signal produced by combining one or a plurality of these signals with each other; and a display section 22 for displaying the video signal from the section 21.

Here, the digital tuner 11, for example, receives a digital terrestrial wave broadcast, a BS digital broadcast, a CS digital broadcast and the like, and is compatible with a data broadcast. The first digital tuner 11 selects a broadcast signal as a channel, demodulates the selected channel signal, and outputs a demodulation signal. The TS decoder A13 decodes and outputs this demodulation signal, and the MPEG decoder MPEG-decodes this decoded signal, and outputs video and voice signals to the video image/graphic processing section 21. In addition, the data broadcast content browser A17 samples data broadcast information from the decoded signal produced from the TS decoder A13, generates a data broadcast screen based on the sampled information, and outputs video image and voice signals to the video image/graphic processing section 21. In this manner, a channel-selected video image, one of the browser screens of a data broadcast, or a composite screen of these browser screens is displayed on the display section 22 in response to operation of the operating section 23 and the working of the control section 10.

Since a plurality of data broadcast browsers 17 and 18 are mounted, in the case where a data broadcast exists in a channel after selected, both of a data broadcast program targeted for protection and a data broadcast program of the channel after selected can be started up at the same time.

### (Another configuration)

Another configuration of a broadcast receiving apparatus 1 according to an embodiment of the present invention will be described with reference to FIGS. 2 to 4. In FIG. 2, this broadcast receiving apparatus 1 is different from that shown in FIG. 1 in configuration in that only one data broadcast content browser 24 is provided. However, such a configuration has a function similar to that shown in FIG. 1 as long as only one data broadcast is viewed. Further, a demodulation signal from a digital tuner A11 and a demodulation signal from a digital tuner B12 can sample a data broadcast, and this configuration is sufficiently practical. Further, if the data broadcast content browser 24 has a capability of processing a plurality of data broadcast programs at the same time, in the case where a channel after selected includes a data broadcast, both of a data broadcast program targeted for protection and a data broadcast program of the channel after selected can be started up at the same time. In addition, this configuration is a feature of an embodiment of the present invention, and is such that registration of protection of a data broadcast described below in detail can be carried out.

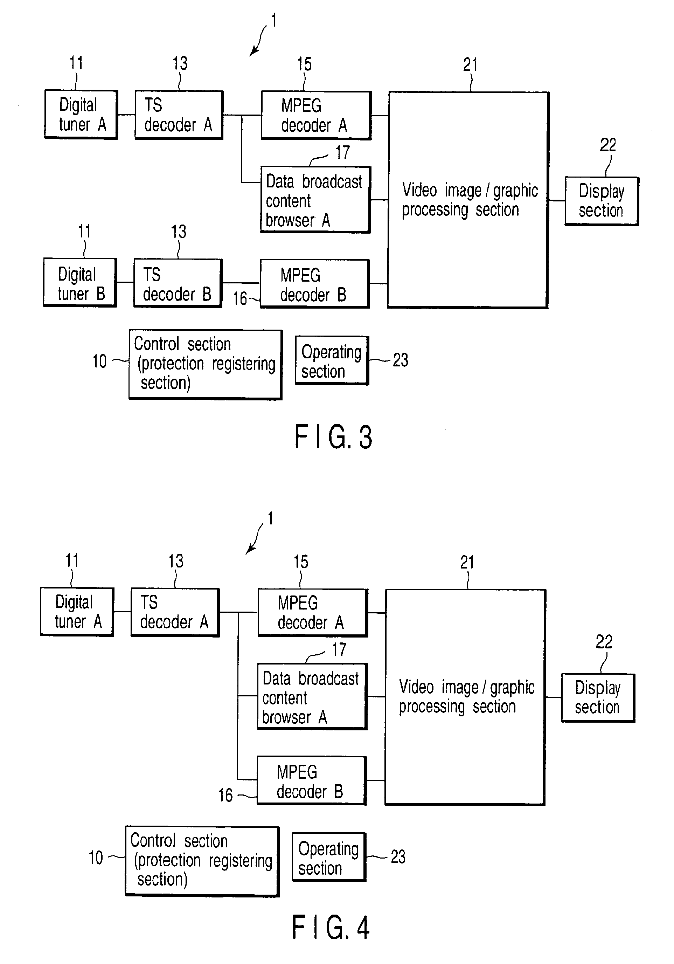

Now, in FIG. 3, this broadcast receiving apparatus 1 is also different from that shown in FIG. 1 in configuration in that only one data broadcast content browser 17 is provided. However, even such a configuration has a function similar to that shown in FIG. 1 as long as only one data broadcast is viewed. However, only a digital tuner A11 is connected, and only the digital tuner A11 is targeted for sampling a data broadcast. This configuration is also a feature of one embodiment of the present invention, and can carry out registration of protection of a data broadcast described below in detail.

Now, in FIG. 4, this broadcast receiving apparatus 1 is configured so as to have one tuner and two MPEG decoders by eliminating a digital tuner B and a TS decoder B from the configuration shown in FIG. 1. With this configuration, a broadcast signal having two frequencies cannot be received. However, for example, in the case where a plurality of video image and voice signals are included in a broadcast signal having one frequency as in a digital BS broadcast such as NHK, even if one channel is selected by one digital tuner A11, two or more types of broadcast screens can be selected. Therefore, this configuration is a feature of one embodiment of the present invention, and can carry out registration of protection of a data broadcast described below in detail.

### <Operation of broadcast receiving apparatus according to an embodiment of the present invention>

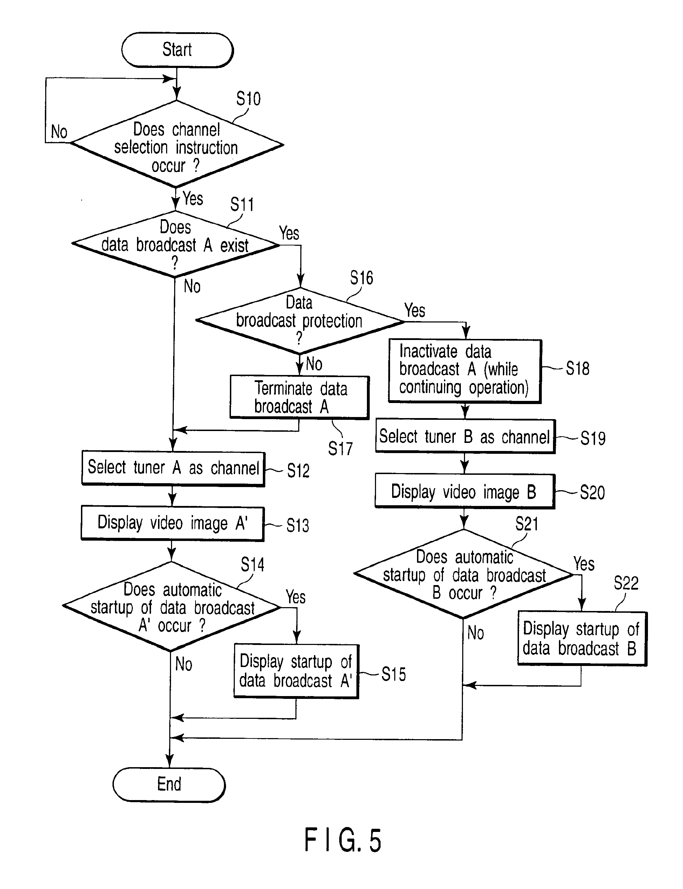

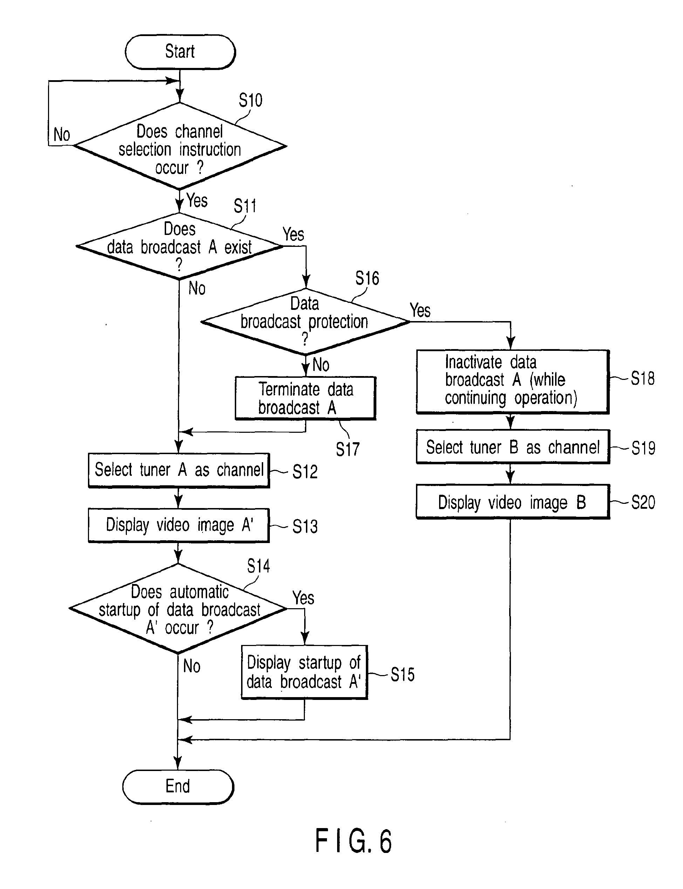

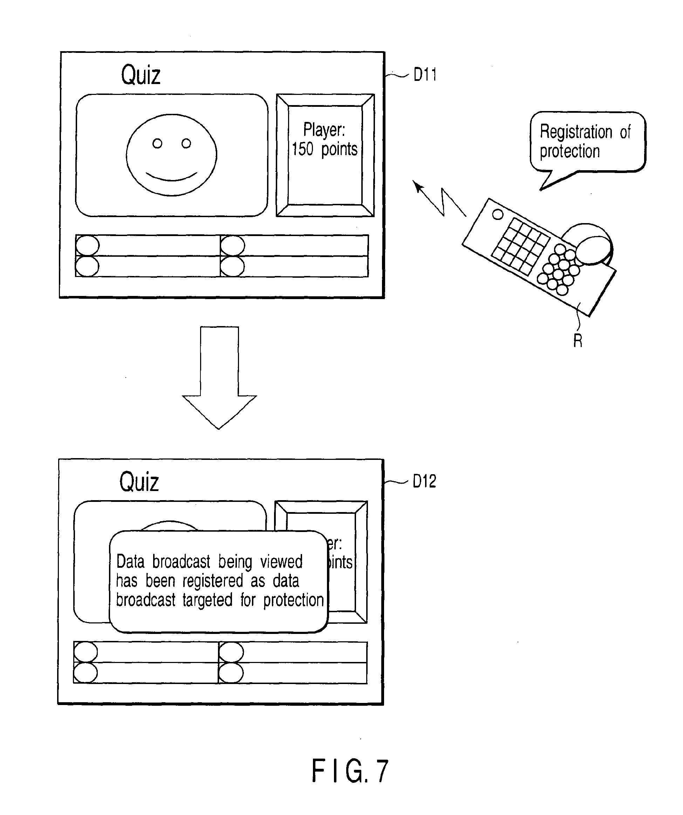

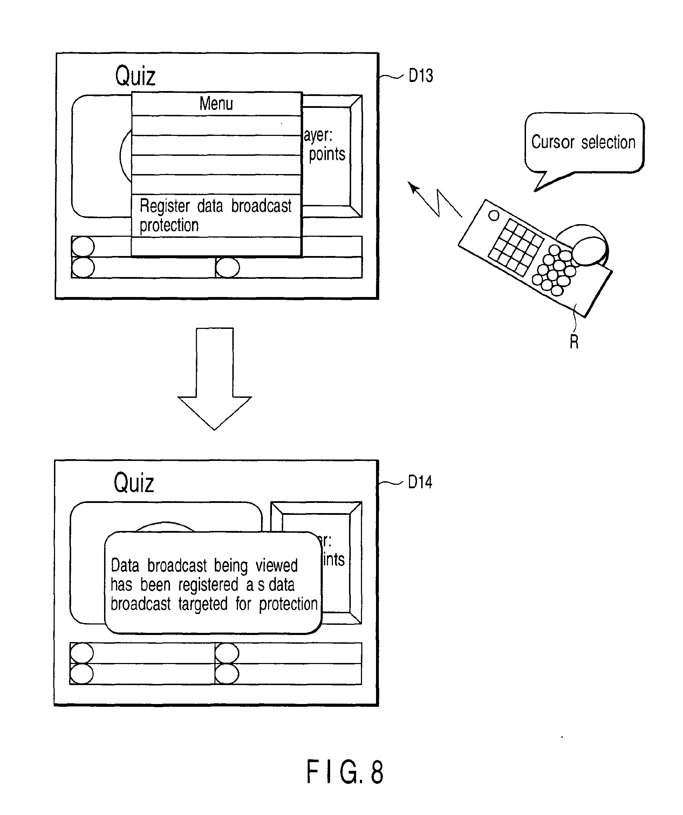

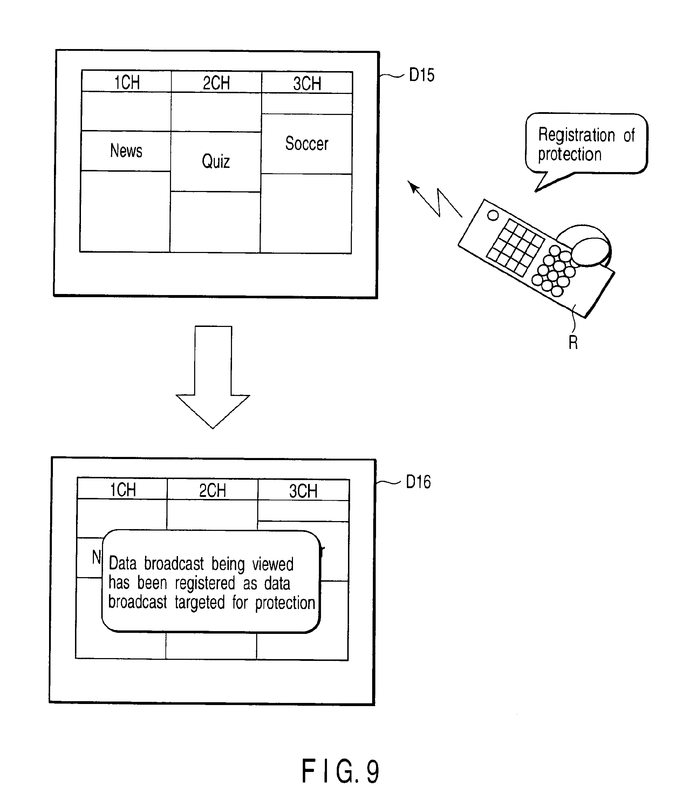

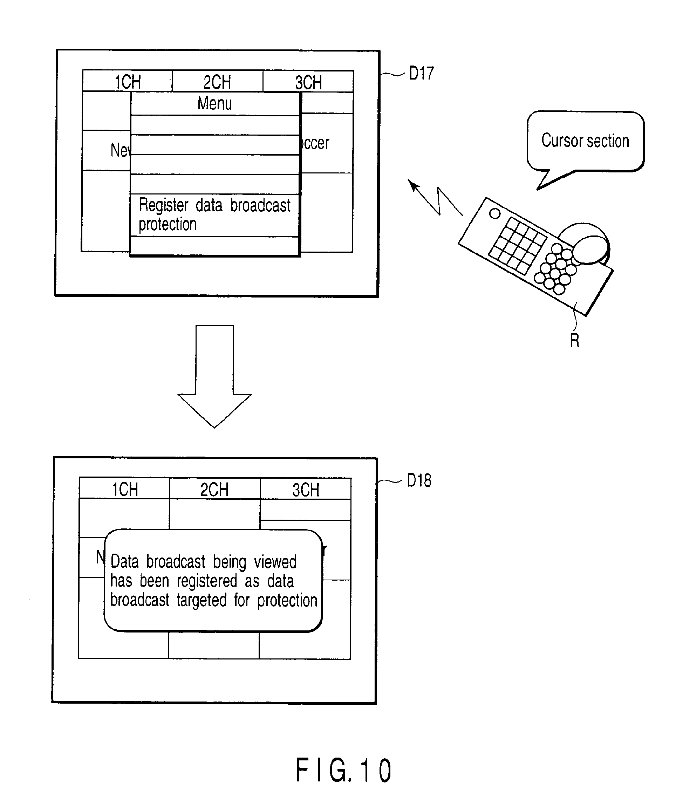

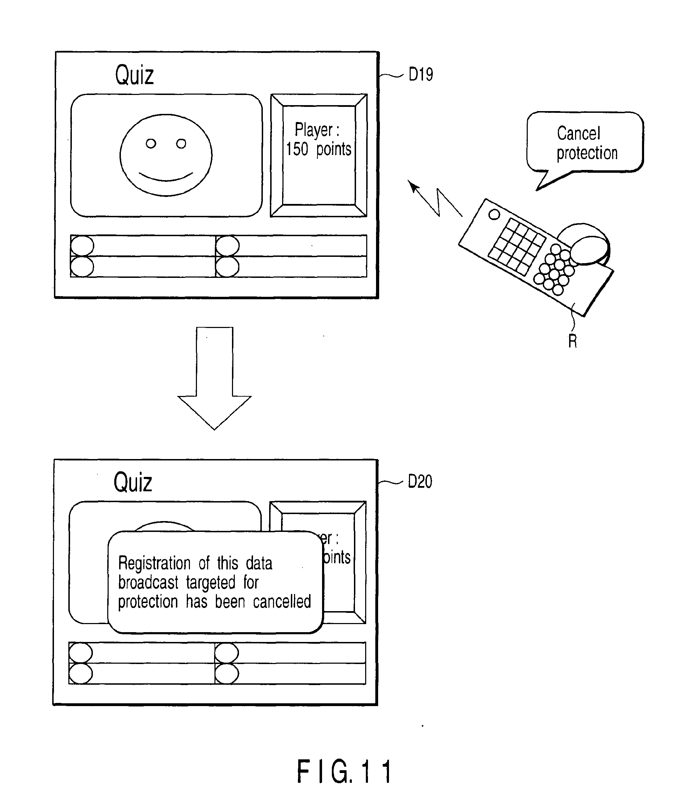

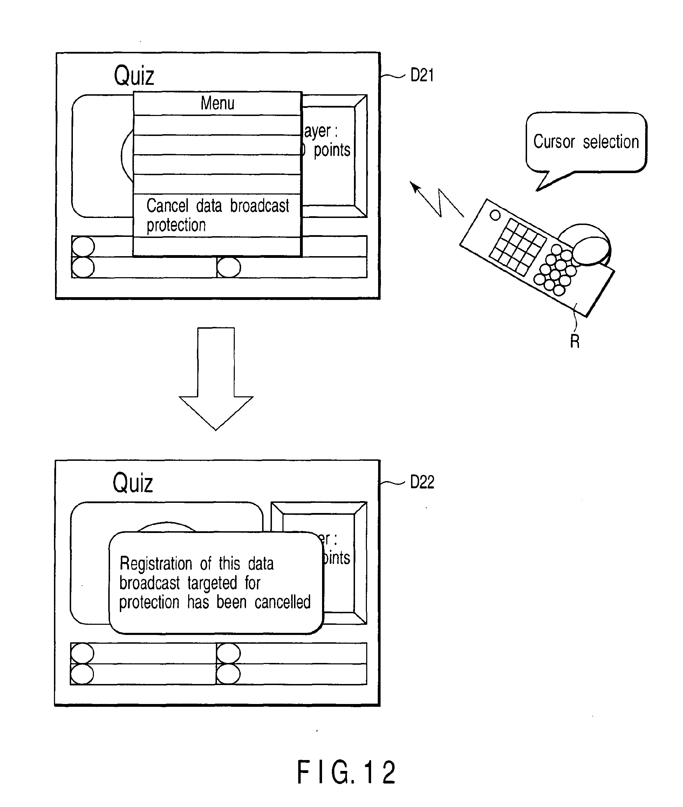

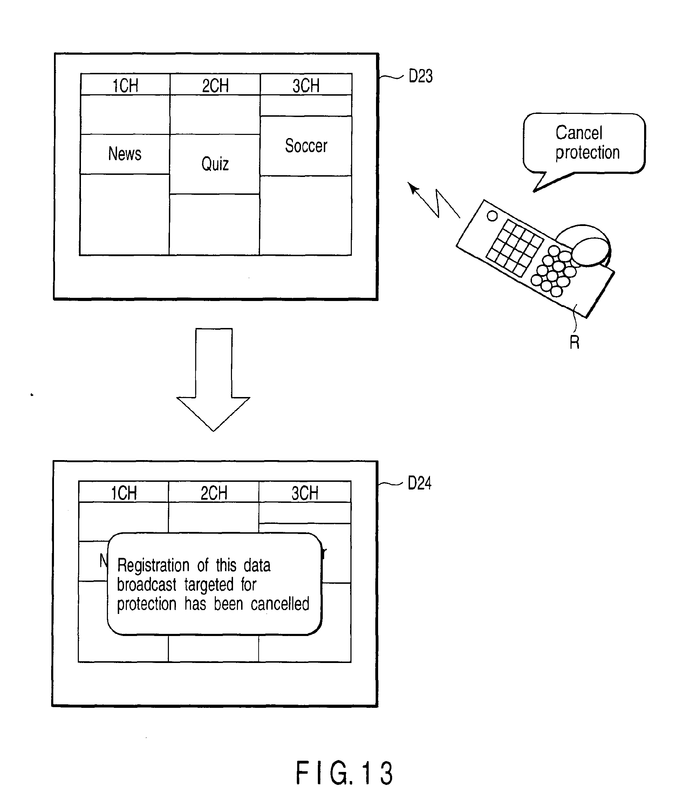

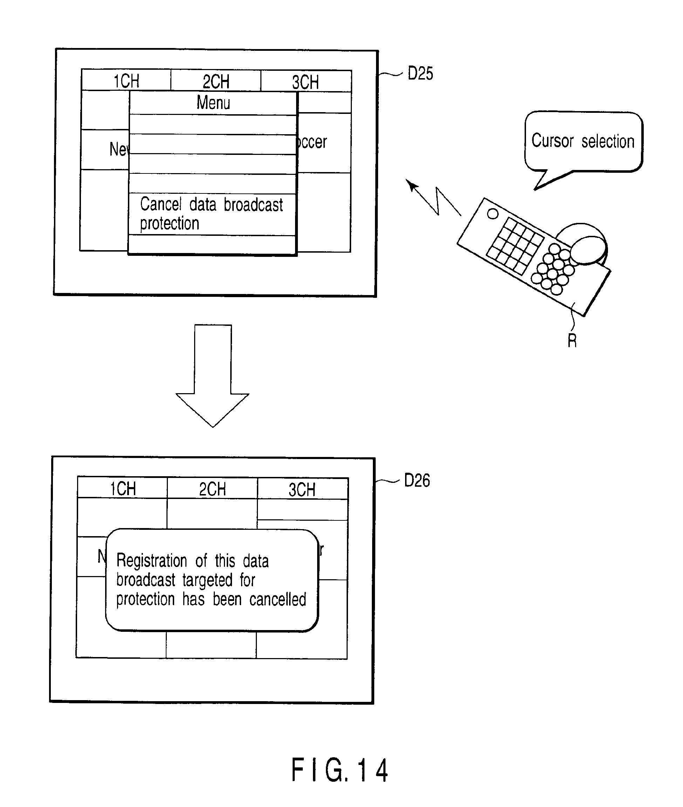

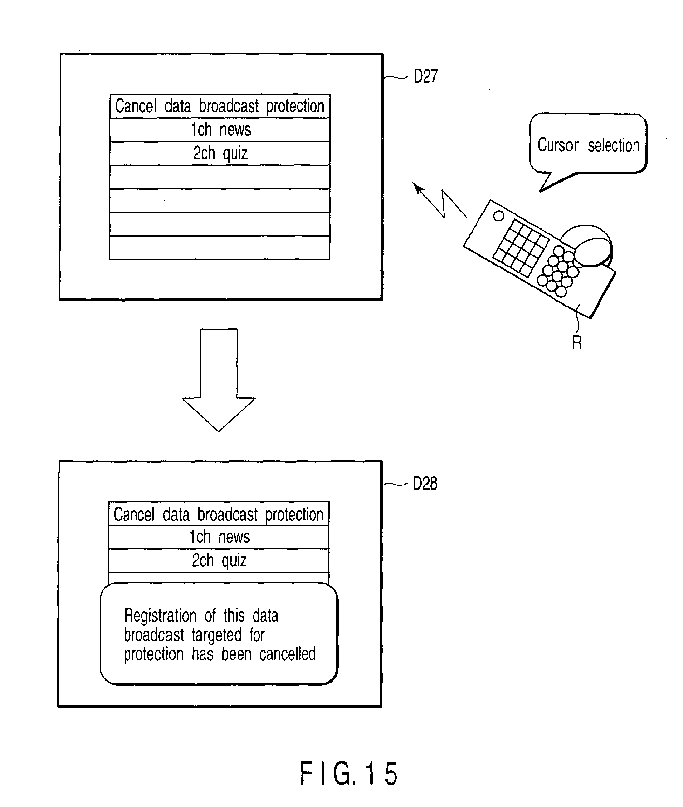

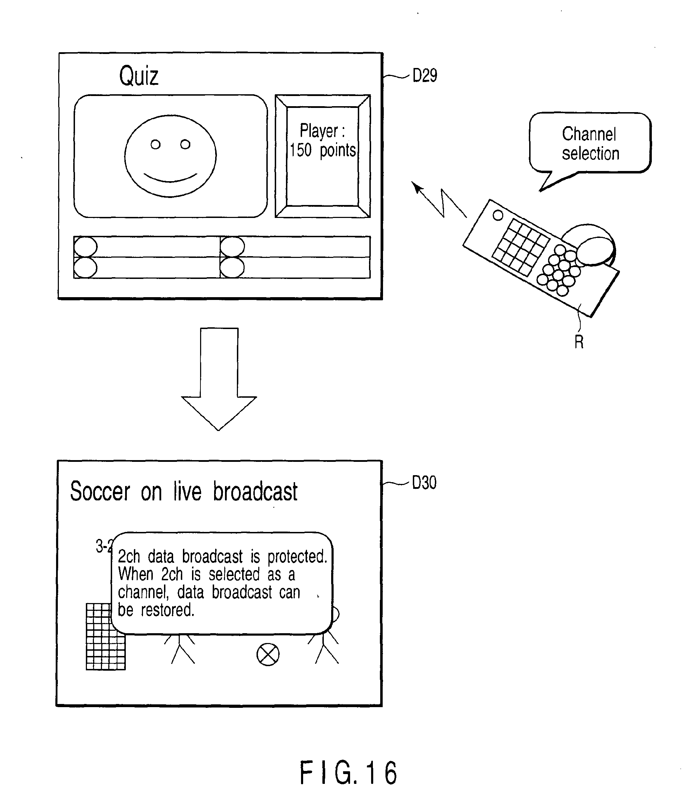

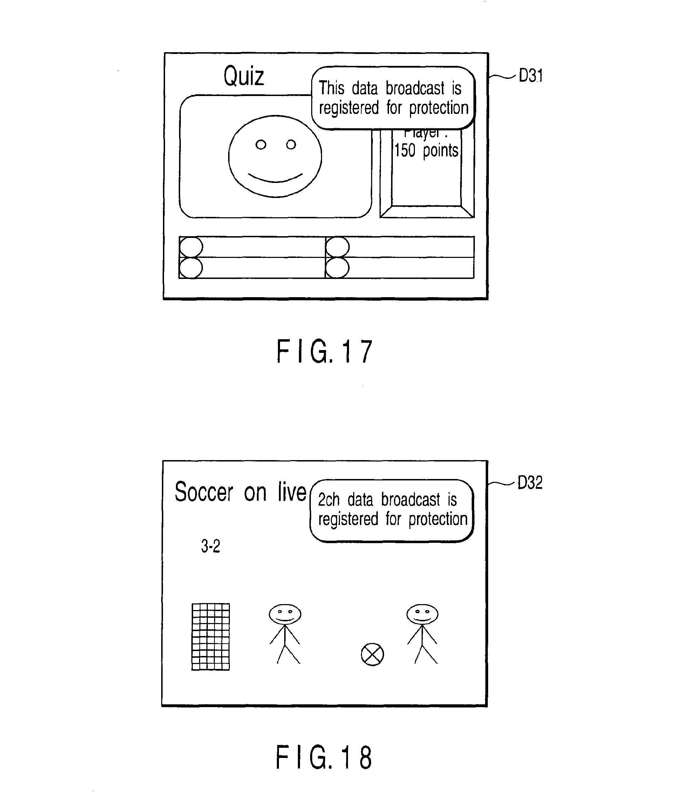

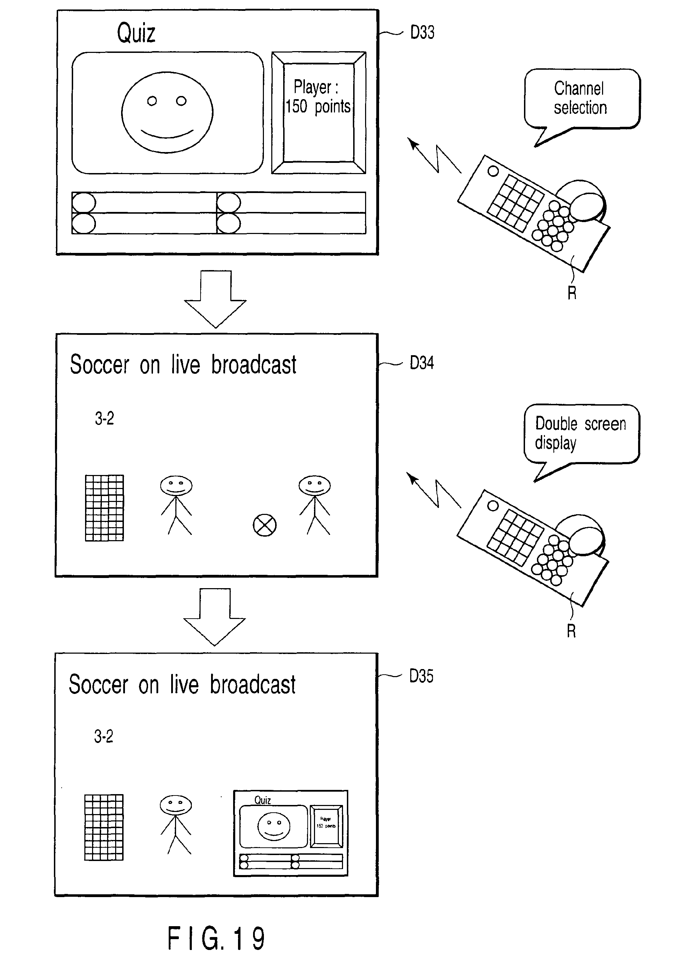

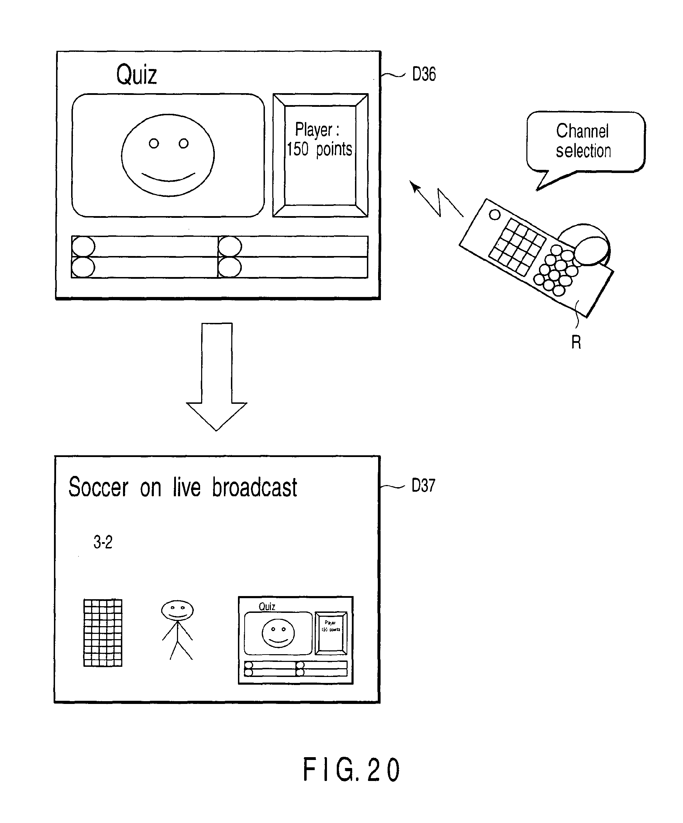

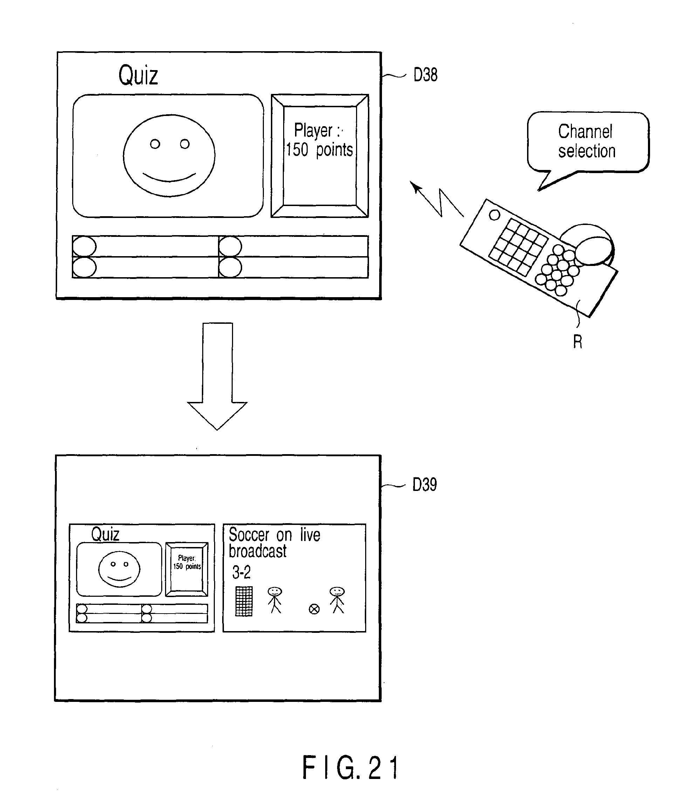

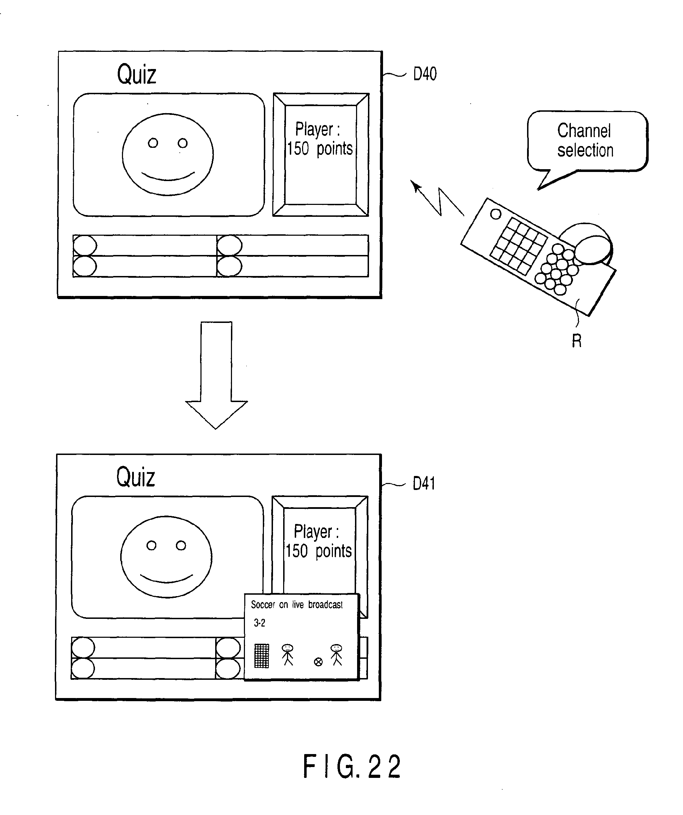

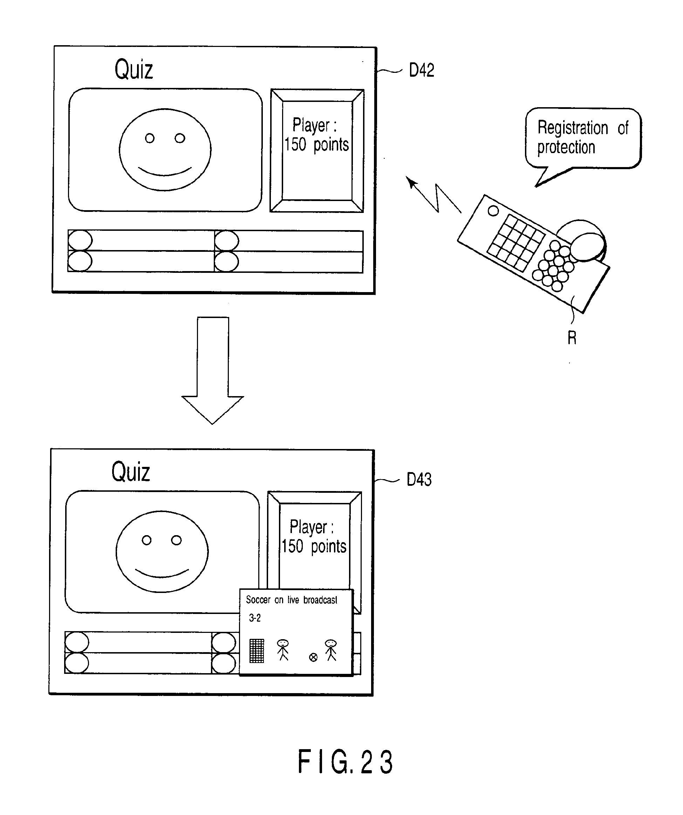

Now, registration of protection or the like of a data broadcast of the foregoing broadcast receiving apparatus 1 will be described in detail with respect to the accompanying drawings. FIGS. 5 and 6 are flow charts each showing an example of channel change in a broadcast receiving apparatus according to an embodiment of the present invention; FIG. 7 is an illustrative view showing an example (remote controller) of an operation for registering protection in a broadcast receiving apparatus according to an embodiment of the present invention; FIG. 8 is an illustrative view showing an example (menu) of an operation for registering protection in a broadcast receiving apparatus according to an embodiment of the present invention; FIG. 9 is an illustrative view showing an example (program table) of an operation for registering protection in a broadcast receiving apparatus according to an embodiment of the present invention; FIG. 10 is an illustrative view showing an example (menu of program table) of an operation for registering protection in a broadcast receiving apparatus according to an embodiment of the present invention; FIG. 11 is an illustrative view showing an example (remote controller) of an operation for canceling protection in a broadcast receiving apparatus according to an embodiment of the present invention; FIG. 12 is an illustrative view showing an example (menu) of an operation for canceling protection in a broadcast receiving apparatus according to an embodiment of the present invention; FIG. 13 is an illustrative view showing an example (program table) of an operation for canceling protection in a broadcast receiving apparatus according to an embodiment of the present invention; FIG. 14 is an illustrative view showing an example (menu of program table) of an operation for canceling protection in a broadcast receiving apparatus according to an embodiment of the present invention; FIG. 15 is an illustrative view showing an example (cursor) of an operation for canceling protection in a broadcast receiving apparatus according to an embodiment of the present invention; FIG. 16 is an illustrative view showing an example of a protecting message in a broadcast receiving apparatus according to an embodiment of the present invention; FIG. 17 is an illustrative view showing an example of a protecting message in a broadcast receiving apparatus according to an embodiment of the present invention; FIG. 18 is an illustrative view showing an example of a protecting message in a broadcast receiving apparatus according to an embodiment of the present invention; FIG. 19 is an illustrative view showing an example of a double screen display after channel change in a broadcast receiving apparatus according to an embodiment of the present invention; FIG. 20 is an illustrative view showing another example of a double screen display after channel change in a broadcast receiving apparatus according to an embodiment of the present invention; FIG. 21 is an illustrative view showing another example of a double screen display after channel change in a broadcast receiving apparatus according to an embodiment of the present invention; FIG. 22 is an illustrative view showing another example of a double screen display after channel change in a broadcast receiving apparatus according to an embodiment of the present invention; and FIG. 23 is an illustrative view showing another example of a double screen display after registration of protection in a broadcast receiving apparatus according to an embodiment of the present invention.

### (Description of operation along flow chart>

Now, an operation of a broadcast receiving apparatus according to an embodiment of the present invention will be described in detail with reference to flow charts shown in FIGS. 5 and 6.

In starting the flow chart shown in FIG. 5 relating to a broadcast receiving apparatus 1 shown in FIG. 1, first, in a state in which power is supplied, it is assumed that one normal video image broadcast (or data broadcast) has been received from a digital tuner A11 by using a TS decoder A13, an MPEG decoder A15, and a data broadcast browser A17. Here, when a user or the like operates a remote controller or the like of an operating section 23 to specify another channel in order to view another channel (step S10), it is asked as to whether or not the tuner A11 is currently receiving a data broadcast at the same time under the control of a control section 10 (step S11).

Here, if no data broadcast has been received, the tuner A11 selects a specified channel (step S12), whereby a video image signal according to a broadcast of the specified channel is displayed on a display section 22 via the digital tuner A11, the TS decoder A13, and the MPEG decoder A15 through a video image/graphic processing section 21 (step S13). At this time, if data broadcast information is included in the selected broadcast signal, a data broadcast content browser A17 automatically starts up (step S14), and startup of a data broadcast A' and display on the display section 22 are enabled (step S15).

In addition, if protection of a data broadcast is not registered in accordance with a method described later in step S16 (step S16), and a data broadcast is being reproduced by the data broadcast browser A17, the data broadcast is terminated, and the data broadcast A is erased to be terminated (step S17). Here, if protection of a data broadcast is registered, while the data broadcast in reproduction is set in an inactive state, receiving by the digital tuner A11 and operations of the TS decoder 13, the data broadcast content browser A17 or the like are continued. Further, accumulation of data broadcast information into a storage region (not shown), is continued, thereby protecting the data broadcast information (step S18).

Here, when the control section 10 detects that a predetermined period of time has elapsed without key input of a remote controller or the like of the operating section 23 (key input queue), a processing operation for the control section 10 to generate a required signal, thereby avoiding receiving of data broadcast information and storage stagnation is preferred as required.

In addition, similarly, in the case where the control section 10 detects that a predetermined period of time has elapsed without key input of a remote controller or the like of the operating section 23 (key input queue), it is preferable to display a message or voice such as "key input is requested in a data broadcast being stored" on a currently viewed program screen.

In addition, similarly, it is preferable to move from the currently viewed program screen to the data broadcast screen being stored by the wording of the control section 10 in response to the key input queue. By these processing operations, a processing operation for registering protection of data on a data broadcast becomes complete.

On the other hand, channel selection of the digital tuner B12 is made in response to a channel specified by the user (step S19). Then, a video image according to a video image signal of the specified channel is displayed on the display section 22 by starting up the digital tuner B12, a TS decoder B14, and an MPEG decoder B16. At the same time, if data broadcast information is included in a demodulation signal of the specified channel, a data broadcast content browser B18 is started up; image information according to data broadcast information is outputted to the video image/graphic processing section 21; and a browser screen according to the video image signal and data broadcast information is displayed on the display section 22 by means of a composite image or the like.

In this manner, required data broadcast information is properly stored. Thus, even in the case where a channel is then returned to a data broadcast, for example, in the case where a quiz or the like is carried out in a data broadcast, data on the data broadcast is not damaged, making it possible to restart the quiz or the like in the data broadcast.

In the flow chart shown in FIG. 6, there is shown a case in which only one data broadcast content browser A shown in FIGS. 2 and 3 is configured. In this case, the data broadcast content browser after channel change shown in FIG. 5 is not started up. However, other steps are common to those in the flow chart shown in FIG. 5.

### <Specific example of operation of broadcast receiving apparatus according to an embodiment of the present invention>

Now, with reference to FIGS. 7 to 23, a description will be given sequentially with respect to specific examples of operation of a broadcast receiving apparatus according to an embodiment of the present invention.

### (Processing operation for registering protection of data broadcast)

First, a description will be given with respect to a specific example of a processing operation for registering protection of a data broadcast. In FIG. 7, registration of protection of data broadcast is carried out by means of a remote controller R or the like. That is, a data broadcast program or a data broadcast channel targeted for protection can be registered by means of a user operation. For example, a control section 10 recognizes a target data broadcast program and stores the recognized program in a storage region by inputting a specific key in viewing. Then, this control section can register a data broadcast program or a data broadcast channel targeted for protection. Here, in the case where the data broadcast program or data broadcast channel targeted for protection has been registered, a message may be displayed on a screen D12.

Alternatively, as shown in FIG. 8, while a target data broadcast program is viewed, a data broadcast program or a data broadcast channel targeted for protection can be registered by cursor selection on a menu through operation of a remote controller R or the like. Here, in the case where the data broadcast program or data broadcast channel targeted for protection has been registered, a message may be displayed on a screen D14.

Next, as shown in FIG. 9, on a screen D15 for an electronic program table, a data broadcast program or a data broadcast channel targeted for protection is registered by means of a remote controller R or the like, whereby a control section 10 recognizes the fact, and store the registered channel in a storage region, making it possible to register the data broadcast program or data broadcast channel targeted for protection. Here, in the case where the data broadcast program or data broadcast channel targeted for protection has been registered, a message may be displayed on a screen D16.

Further, as shown in FIG. 10, on a screen D17 for an electronic program table, a specific key is inputted in a state in which a cursor is pointed to a target data broadcast program, whereby the control section 10 recognizes the fact, and stores the key input in a storage region, making it possible to register the data broadcast program or data broadcast channel targeted for protection. Alternatively, on the electronic program table, in a state in which a cursor is pointed to a target data broadcast program, the control section 10 recognizes the fact and stores it in a storage region by menu display/cursor selection on a menu, making it possible to register the data broadcast program or data broadcast channel targeted for protection.

In addition, even by specifying a data and a time or specifying a keyword, the control section 10 recognizes the fact and stores it in a storage region similarly, making it possible to register the data broadcast program or data broadcast channel targeted for protection. In the case where the data broadcast program or data broadcast channel targeted for protection has been registered, a message may be displayed as is the case with a display screen D18. In the case where a forthcoming program has been registered as a data broadcast program targeted for protection, viewing reservation registration may be carried out at the same time.

### (Processing operation for canceling protection of data broadcast)

Now, a specific example of a processing operation for canceling protection of a data broadcast will be described with reference to the accompanying drawings. In FIG. 11, in response to a display screen D19, a data broadcast program or a data broadcast channel targeted for protection can be cancelled by means of a user operation. For example, on the screen D19 for a target data broadcast program, a specific key is inputted by means of a remote controller R or the like, whereby a control section 10 recognizes the fact and deletes protected and registered data in a storage region, making it possible to cancel protection of the data broadcast program or data broadcast channel targeted for protection. In the case where the data broadcast program or data broadcast channel targeted for protection has been cancelled, a message may be displayed, as is the case with a display screen D20.

In addition, in FIG. 12, in viewing a target data broadcast program, the control section 10 recognizes cursor selection on a menu screen D21 and deletes protected and registered data in a storage region, making it possible to cancel the data broadcast program or data broadcast channel targeted for protection. In the case where the data broadcast program or data broadcast channel targeted for protection has been cancelled, a message may be displayed as is the case with a screen D22.

In addition, in FIG. 13, a data broadcast program or data broadcast channel targeted for protection can be cancelled on a screen D23 for an electronic program table. For example, on the screen D23 for an electronic program table, in a state in which a target data broadcast program is pointed by a cursor, a specific key such as a remote controller R is inputted, whereby the control section 10 recognizes the fact and deletes the protected and registered data in a storage region, making it possible to cancel the data broadcast program or data broadcast channel targeted for protection.

In addition, in FIG. 14, on a screen D25 for an electronic program table, in a state in which a target data broadcast program is pointed by a cursor, a specific key such as a remote controller R is inputted, whereby the control section 10 recognizes the fact and deletes the protected and registered data in a storage region by menu display/cursor selection on a menu, making it possible to cancel the data broadcast program or data broadcast channel targeted for protection.

In addition, a data broadcast program or data broadcast channel targeted for protection can be cancelled by specifying a date and a time or specifying a keyword. In the case where the data broadcast program or data broadcast channel targeted for protection has been cancelled, a message may be displayed, as is the case with a screen display D26.

In addition, in FIG. 15, on a display screen D27 for list selection, cursor selection is made by means of a remote controller R or the like, whereby the control section 10 recognizes the fact and deletes the protected and registered data in a storage region, making it possible to cancel a data broadcast program or data broadcast channel targeted for protection. That is, a list of the data broadcast program or data broadcast channel targeted for protection is displayed as a list, and cursor selection is made from among the list, thereby making it possible to cancel the data broadcast program or data broadcast channel targeted for protection. At this time, a message may be displayed, as is the case with a display screen D28.

### (Display method after registering protection of data broadcast)

Now, a display method after registering protection of a data broadcast will be described in detail with reference to FIGS. 16 to 23.

In FIG. 16, in response to a display screen D29 on which a data broadcast targeted for protection is being received, when another channel is selected by means of a remote controller R or the like, it is preferable to display a message "data broadcast targeted for protection is in viewing" by the working of the control section 10 or the like. While displaying a message indicating that "data broadcast targeted for protection is continued without interruption, and data broadcast is targeted for protection", it is preferable to switch a current screen to a video image screen D30 of such another channel.

In FIG. 17, in viewing a data broadcast targeted for protection, it is preferable to display a message indicating that "data broadcast targeted for protection is in viewing" on a screen D31 by the working of the control section 10 or the like. For example, when a banner or a program description is displayed, it is preferable that an icon is illuminated. Alternatively, an icon or a message may be always displayed on a viewing screen.

In FIG. 18, in the case where viewing of another channel is in progress without terminating a data broadcast targeted for protection, it is preferable that display the fact on a display screen D32 of another channel by the working of the control section 10 or the like. For example, a banner or a program description is displayed, an icon is illuminated. Alternatively, an icon or a message may always be displayed on a viewing screen.

In FIG. 19, it is preferable to display at the same time a data broadcast targeted for protection and a video image or a data broadcast selected as a channel. That is, on a data broadcast screen D33, a channel selection is made by means of a remote controller R or the like, thereby instructing switching a current channel to another channel. Then, on a display screen D34 of another channel, a double screen display button or the like is depressed by means of a remote controller R or the like. In thus manner, it is preferable to display a composite data broadcast screen in a display screen D35 of another channel by the working of a control section 10 or the like.

In FIG. 20, on a data broadcast screen D36, a channel selection is made by means of a remote controller R or the like, it is preferable to carry out switching a current channel to another channel, and at the same time, to display a composite data broadcast screen on a display screen D37 of another channel.

In FIG. 21, on a data broadcast screen D38, a channel selection is made by means of a remote controller R or the like, it is preferable to carry out switching a current channel to another channel, and at the same time, to display a display screen of another channel and a data broadcast screen in parallel to each other on a double screen display screen D39.

In FIG. 22, on a data broadcast screen D40, a channel selection is made by means of a remote controller R or the like, it is preferable to display a composite display screen of another channel on a data broadcast screen D41 by the working of the control section 10 or the like.

In FIG. 23, on a data broadcast screen D42, registration of protection is instructed by means of a remote controller R or the like. In this manner, it is preferable to display a composite display screen of another channel on the data broadcast screen D41 by the working of the control section 10 or the like.

One skilled in the art can achieve the present invention in accordance with a variety of embodiments described above. Further, it is obvious for one skilled in the art to conceive a variety of modified examples of these embodiments, and it is possible to apply to a variety of embodiments even if one skilled in the art has no inventive ability. Therefore, the present invention covers a broad range without departing from a disclosed principle and novel features, and is not limited to the above described embodiments.

## Claims

1. A broadcast receiving apparatus, **characterized by** comprising:
first and second tuner sections (11, 12) which select a broadcast signal as a channel, demodulate the selected channel, and output a demodulation signal;
a decoder section (15) which decodes the demodulation signal and outputs video image and voice signals;
a browser section (17) which samples data broadcast information from the demodulation signal produced from the tuner section and generates a data broadcast screen;
a control section (22) which controls the tuner section, the decoder section, and the browser section in order to carry out receiving of another station by means of the second tuner section while continuing data broadcast receiving and data broadcast information storing by the first tuner section when an instruction for protection of the data broadcast occurs, and the first tuner section receives a receiving instruction of the another station while receiving the data broadcast.

2. The broadcast receiving apparatus according to claim 1, **characterized by** further comprising a second browser section (18) which samples data broadcast information from the demodulation signal of the second tuner section and generates a data broadcast screen,
wherein the control section, having received a receive instruction of the another channel, carries out receiving of the another channel by means of the second tuner section, and further, samples data broadcast information from the demodulation signal of the second tuner section by means of the second browser section, and then, makes control so as to generate a data broadcast screen.

3. The broadcast receiving apparatus according to claim 1, **characterized in that** registration of protection of the data broadcast is carried out from a menu screen (FIG. 8) of an operating section.

4. The broadcast receiving apparatus according to claim 1, **characterized in that** registration of protection of the data broadcast can be set in response to a program table (FIG. 10) displayed by means of an operating section.

5. The broadcast receiving apparatus according to claim 1, **characterized in that** the control section disables data broadcast receiving and data broadcast information storage of the first tuner section if an instruction for canceling the registration of protection (FIGS. 11 to 14) occurs after an instruction for protection of the data broadcast has occurred.

6. The broadcast receiving apparatus according to claim 1, **characterized in that** the control section, having received the instruction for receiving of the another channel, displays a message (FIG. 16) indicating that the data broadcast is targeted for protection, in part of a broadcast screen selected as a channel by means of the second tuner section.

7. The broadcast receiving apparatus according to claim 1, **characterized in that** the control section, having received an instruction for receiving of the another channel, displays a broadcast screen selected as a channel by means of the second tuner section, and further, having received an instruction for double screen display, displays a screen (FIG. 19) of the data broadcast being protected in the broadcast screen.

8. The broadcast receiving apparatus according to claim 1, **characterized in that** the control section, having received an instruction for receiving of the another channel, displays a screen (FIGS. 20 to 22) of the data broadcast being protected together with the broadcast screen selected as a channel by means of the second tuner section.

9. The broadcast receiving apparatus according to claim 8, **characterized in that** the control section, having received an instruction for receiving of the another channel, displays a screen (FIG. 20) of the data broadcast being protected in the broadcast screen together with the broadcast screen selected as a channel by means of the second tuner section.

10. The broadcast receiving apparatus according to claim 8, **characterized in that** the control section, having received an instruction for receiving of the another channel, displays a screen (FIG. 21) of the data broadcast being protected, a size of which is equal to that of the broadcast screen selected as a channel by means of the second tuner section.

11. The broadcast receiving apparatus according to claim 1, **characterized in that** the control section, having received an instruction for receiving of the another channel, makes control so as to display the broadcast screen selected as a channel by means of the second tuner section in a screen (FIG. 22) of the data broadcast being protected.

12. The broadcast receiving apparatus according to claim 1, **characterized in that** the control section, having received an instruction for registration of protection of the data broadcast while receiving the data broadcast by means of the first tuner section, makes control so as to display a broadcast screen (FIG. 23) selected as a channel by means of the second tuner section in a screen of the data broadcast being protected.

13. The broadcast receiving apparatus according to claim 1, **characterized in that** the control section, having detected that a signal input queue state is established in storage of the data broadcast, makes a display indicating that key input is requested in a data broadcast being stored, on a receiving screen of the another channel.

14. The broadcast receiving apparatus according to claim 1, **characterized in that** the control section, having detected that a signal input queue state is established in storage of the data broadcast, moves from the receiving screen of the another channel to the data broadcast screen.

15. A broadcast receiving method, **characterized by** comprising:
selecting a broadcast signal as a channel by means of a first tuner;
demodulating the selected signal;
outputting video image and voice signals; and
in viewing the broadcast signal produced by the first tuner, upon receipt of a receive instruction of another channel, carrying out receiving of the another channel by means of a second tuner section while continuing data broadcast receiving of the first tuner section and data broadcast information storage.
